# FASCICULE DE BREVET EUROPEEN

(11) **EP 1 276 621 B1**
(45) Date de publication et mention de la délivrance du brevet: **02.01.2004**
(21) Numéro de dépôt: 00972487.3
(22) Date de dépôt: 17.10.2000
(51) Int. Cl.: B44F 1/02

(54) **PROCEDE DE PRODUCTION DE REVETEMENTS DE SOLS ET DE MURS A EFFET DE DECOR DE BRILLANCE DIFFERENTIEL**
HERSTELLUNGSVERFAHREN FÜR WAND- UND BODENBELÄGE, DIE EINEN DIFFERENTIERTEN GLANZ ZEIGEN
METHOD FOR PRODUCING FLOOR-FINISH AND WALL-FINISH WITH DIFFERENTIAL GLOSS DECORATION EFFECT

(30) Priorité: 25.04.2000 EP 00870084
(43) Date de publication de la demande: 22.01.2003
(73) Titulaire: Tarkett Sommer S.A., 92748 Nanterre Cedex (FR)
(72) Inventeur: DAO VIET, Dung, B-4920 Aywaille (BE); HOUBA, Gabriel, L-9676 Noertrange (LU)
(74) Mandataire: Van Malderen, Michel
(86) Numéro de dépôt international: PCT/BE2000/000125
(87) Numéro de publication internationale: WO 2001/081102

(56) Documents cités:
- US-A- 4 309 452
- US-A- 4 464 423
- US-A- 5 165 967
- US-A- 5 779 840
- PATENT ABSTRACTS OF JAPAN vol. 014, no. 552 (M-1056), 7 décembre 1990 (1990-12-07) & JP 02 235744 A (TOPPAN PRINTING CO LTD), 18 septembre 1990 (1990-09-18)
- PATENT ABSTRACTS OF JAPAN vol. 016, no. 400 (C-0977), 25 août 1992 (1992-08-25) & JP 04 132672 A (TOTO LTD), 6 mai 1992 (1992-05-06)

## Description

### Objet de l'invention

La présente invention concerne un procédé amélioré pour la production de revêtement de sols et de murs à effet de décors contrastés, mats et brillants, combinables avec d'autres effets de décors (dessins, relief, texture ou structure) classiques pour ce type de produit.

L'invention s'étend également aux produits résultant de ce procédé.

### Arrière-plan technologique

Les revêtements de sols, en particulier les revêtements de sols du type résilient, afin de satisfaire les demandes de la clientèle, évoluent en permanence tant au niveau du décor, à savoir essentiellement le dessin et le relief (grainage mécanique ou chimique) qu'au niveau des qualités intrinsèques d'usage (résistance à l'usure, résilience, etc.)

Les effets recherchés sont de différents ordres mais impliquent en général une concordance (ou registre) entre le dessin, le relief et d'éventuels autres effets optiques.

Sur ce dernier plan, la tendance est de créer, de préférence en concordance avec un dessin et un relief, des effets localisés mettant en évidence certaines zones par rapport à d'autres par des différences de brillance.

L'état de la technique, pour obtenir des effets mats et brillants, consiste le plus souvent à grainer le produit localement de façon mécanique avec des graineurs donnant des matités différentes.

L'exigence actuelle de performance en terme d'usure et de résistance à l'agression chimique demande la mise en oeuvre de traitements de surface spécifiques avec des performances supérieures aux produits de base. Malheureusement, l'application de telles couches en surface fait disparaître les effets de matité obtenus par grainage mécanique.

De plus, il convient de tenir compte des technologies existantes pour appliquer des couches ou des traitements de surface, notamment sur des lés de très grandes largeurs. Les solutions proposées ne doivent pas, pour autant, impliquer des déclassements du matériel existant et des investissements prohibitifs dans de nouveaux équipements.

Dans le document WO 99/39042, on décrit des produits de revêtements de sols et de murs à effet de brillance contrastée contenant au moins une couche avec des particules, telles que de l'alumine, qui sont résistantes à l'usure.

La technique décrite implique l'utilisation d'une résine réticulable telle qu'une résine à base d'uréthane, en fonction de la présence ou non desdites particules.

Ce procédé exige au minimum un grainage chimique et prévoit une couche de recouvrement partielle appliquée au rouleau sur les reliefs du produit et présentant une différence de brillance pour créer un effet contrasté. Une deuxième solution préconisée consiste à appliquer une couche de protection « topcoat » continue et une couche « topcoat » discontinue sur les reliefs.

Cette technique d'application d'un revêtement sur des reliefs, appelée aussi par ailleurs « kiss-coating » est particulièrement délicate à mettre en oeuvre.

Un mauvais réglage de l'équipement peut conduire à une variation d'épaisseur du produit pouvant conduire soit à une perte de contact, soit à un écrasement du relief et empêche, dans les deux cas, d'obtenir l'effet recherché.

L'homme de l'art voit immédiatement que cette technique permet seulement la réalisation que de deux niveaux de brillance.

US-A-4 464 423 décrit un procédé de production de revêtement de sols et de murs à effet de décor de brillance différentiel, le procédé comprenant la réalisation d' un revêtement sous-jacent, puis la réalisation des effets de brillance par des dépôts différenciés comprenant une première couche et une seconde couche, la seconde couche étant destinée à couvrir partiellement ou entièrement la première couche de matité différente et étant déposée de façon discontinue sans recouvrement total d'au moins deux couches de protection de caractéristiques différentes, en registre ou non, avec le décor sous-jacent et/ou avec le relief du produit, le degré de brillance des dites couches de protection à effets de brillance différenciés variant entre 5 à 90 (sous 60 degrés) et l'épaisseur des couches ainsi appliquées variant de 3 à 50 micromètres.

### Buts visés par l'invention

La présente invention vise à éviter les inconvénients pré-mentionnés. Elle vise en particulier à proposer un procédé économique et facile à mettre en oeuvre, permettant par une application différenciée de différents grades ou qualités « topcoat » de réaliser un revêtement avec une bonne résistance à l'usure à effet de contraste multiple.

D'autres caractéristiques, détails et avantages de la présente invention apparaîtront dans la description qui suit d'une forme d'exécution préférée de l'invention.

### Eléments caractéristiques de l'invention

Selon l'invention qui est définie dans les revendications ci-jointes, on produit d'abord un revêtement de sol et de mur sous-jacent suivant les techniques classiques de production et bien connues de l'homme de l'art et on réalise ensuite des effets de brillance par dépôts différenciés sans recouvrement total d'au moins deux couches de protection de type « topcoat » de caractéristiques différentes, en registre ou non avec le décor sous-jacent.

On obtient par ces techniques des produits intégrant des effets de brillance différenciés dans les couches de protection du type « topcoat »

Le revêtement sous-jacent destiné à recevoir le décor à effet de brillance différencié peut être lisse, en relief par grainage chimique ou mécanique, et se présente sous forme flexible ou rigide.

Le décor sur le revêtement sous-jacent peut être imprimé, être réalisé par des inclusions de matières (inlaid) ou encore être obtenu par d'autres techniques classiques. Le produit peut être réalisé notamment sur les équipements classiques de production de revêtement de sols, jusqu'à une largeur de 4 m ou plus.

La nature du revêtement peut être constituée par des matières synthétiques telles que le PVC et les polyoléfines, par des matières semi-synthétiques du type linoleum, et peuvent être également des produits laminés ou du bois.

Sur le revêtement sous-jacent choisi, on réalise d'abord un premier dépôt, continu ou discontinu, d'une première couche de protection suivi d'un séchage.

On dépose ensuite une seconde couche de protection discontinue de matité différente de la première.

La seconde couche peut, si l'on souhaite, recouvrir partiellement la première couche, si elle est discontinue. Il y aura nécessairement un tel recouvrement partiel lorsque la première couche est continue.

Des effets de matité complémentaires (par exemplaire intermédiaire entre la couche la plus brillante et la plus mate) peuvent être obtenus soit par suite du recouvrement partiel de la première et de la deuxième couche, soit par l'application d'une ou plusieurs couches de protection supplémentaires.

Après chaque application d'une couche de revêtement de protection, on procède à un sèchage. Le sèchage peut être aussi bien réalisé à l'aide d'air chaud que par radiation IR.

Après séchage, on procède également à une réticulation, de préférence, sous radiation UV ou par faisceau d'électrons.

Les dépôts de brillance différenciés peuvent être en registre ou non avec le décor propre du revêtement et/ou être en registre ou non avec les reliefs du produit.

Le degré de brillance des couches de protection à effets de brillance différenciés peut varier entre 5 à 90 (sous 60 degrés).

L'épaisseur des couches ainsi appliquées peut varier de 3 à 50 µm.

Le dépôt des différentes couches de protection de brillance différenciée peut se réaliser par une ou plusieurs des techniques suivantes (en tenant compte, bien entendu, du fait que l'on peut souhaiter réaliser la première couche de protection éventuellement en continu) :
- lame d'air;
- dépôt sérégraphique;
- dépôt héliographique;
- dépôt flexographique;
- enduiseuse à rouleau.

Les couches appliquées, en plus de leur caractéristique de brillance spécifique, peuvent être également colorées.

Ainsi qu'il sera décrit plus en détail ci-après, la technique préconisée permet de créer des effets de contrastes mat-brillant à deux ou plus de deux degrés de brillance différents.

Les couches de protection choisies contiennent des résines classiquement utilisées en topcoat, colorées ou non, de façon à appliquer une couche de brillance spécifique contrastée avec la brillance d'une couche voisine.

Contrairement aux techniques dites de "kiss-coating", la technique préconisée permet également de recouvrir tant les creux que les sommets du relief.

La résine contenue dans les couches de protection est choisie parmi les résines réticulables classiques, en particulier réticulables par UV ou par faisceau d'électrons, que l'on peut choisir dans le groupe constitué par les résines: polyuréthanne, mélamine, epoxy, acrylique ou ionomère modifié etc. Des résines thermo-réticulables, bien que plus difficiles à mettre en oeuvre, peuvent également convenir. L'incorporation d'agents à effet de matité dans de telles compositions ne réduit pas essentiellement, et peut même améliorer, les propriétés propres de résistance à l'usure et l'on dispose donc d'une gamme très large de techniques et de produits pour la mise en oeuvre du procédé.

L'invention sera décrite plus en détail, en se référant à une forme d'exécution illustrative et à des exemples de mise en oeuvre de la technique de l'invention, eu égard aux dessins annexés.

### Brève description des dessins

La Figure 1 illustre les étapes opératoires d'une ligne de production du produit selon l'invention.

La Figure 2 illustre schématiquement, une coupe d'un produit plat obtenu par un procédé continu selon une première forme d'exécution.

La Figure 3 correspond à la Figure 2 pour une seconde forme d'exécution.

La Figure 4 diffère des deux précédentes, essentiellement en ce qu'elle concerne un produit en relief mais également réalisé en continu.

La Figure 5 illustre schématiquement une coupe d'un produit du type « parquet en bois » réalisé par un procédé discontinu.

Dans les différentes figures, des repères de références identiques sont utilisés pour des éléments constitutifs identiques ou similaires des produits obtenus.

### Description détaillée d'une forme d'exécution préférée de l'invention

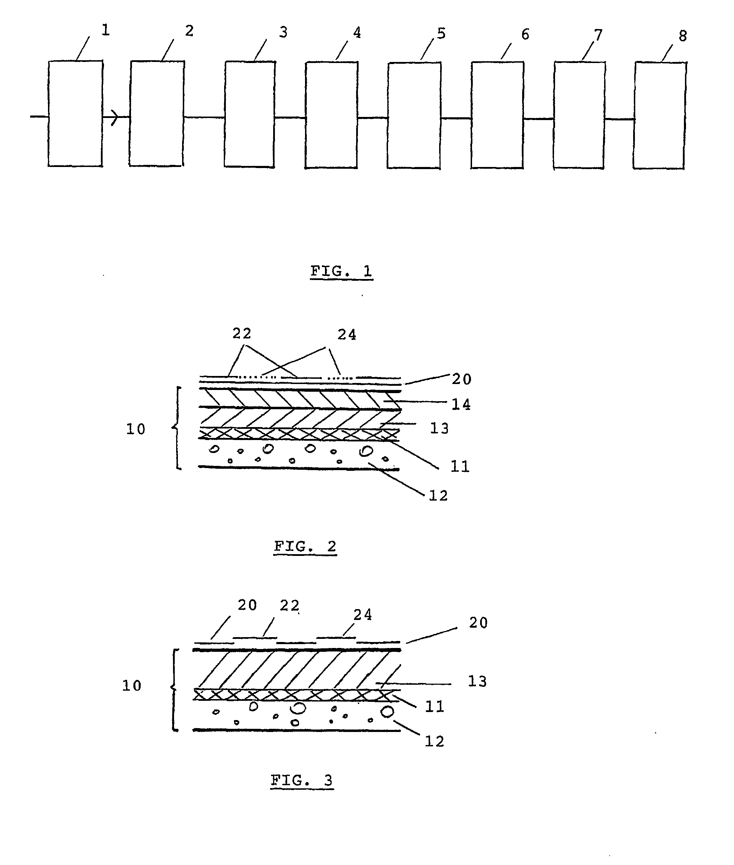

La ligne de fabrication schématisée à la Figure 1 implique les étapes opératoires suivantes :
- Fabrication du support 1 de manière classique ;.
- Premier dépôt 2 d'une résine de polyuréthanne ;
   Ce dépôt peut se réaliser pratiquement par toutes les techniques courantes, par induction à la lame d'air, au rouleau ou encore par sérigraphie, héliographie ou flexographie ;
- Séchage 3. Il est possible de sécher à l'aide d'air chaud et/ou à l'aide d'installation de chauffage à I.R. ;
- Réticulation 4. Conviennent à cet effet, les techniques habituelles UV ou faisceau d'électrons ;
- Second dépôt discontinu 5 d'une résine de polyuréthanne par héliographie ou flexographie ;
- Séchage 6 en utilisant notamment des moyens identiques à ceux de l'étape 3 ;
- Réticulation 7, notamment en utilisant des moyens identiques à ceux de l'étape 4 ;
- Troisième dépôt discontinu 8 éventuel d'une résine de polyuréthanne.

Il convient de noter que la référence au polyuréthanne est illustrative et que d'autres résines ou compositions de résines, en particulier réticulables par UV ou faisceau d'électrons peuvent convenir.

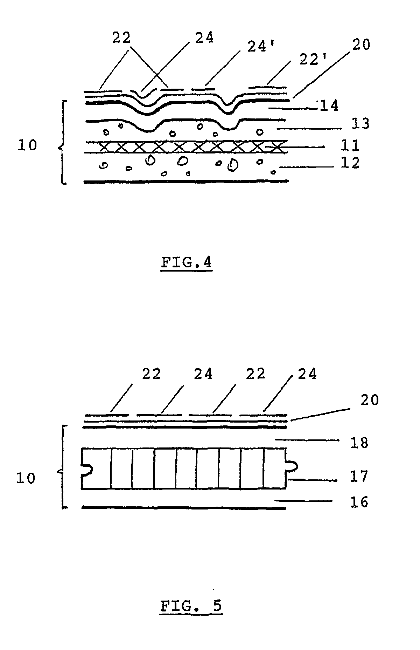

Dans les Figures 2 à 5, les repères communs 10 désignent, généralement, une sous-couche composite, le repère 20 désigne une première couche de « topcoat » qui peut être, selon les cas, continue ou discontinue et correspondant au premier dépôt 2 de la Figure 1, le repère 22 une seconde couche de « topcoat », nécessairement discontinue, correspondant au second dépôt 5 de la Figure 1, et 24 une seconde couche de « topcoat » correspondant à un troisième dépôt (éventuel) 8 de la figure 1.

Dans le cas des Figures 2 et 3, les sous-couches 10 peuvent, à titre d'exemple, comporter par exemple un voile de verre 11 imprégné de mousse 12, une couche compacte 13 et une couche d'usure classique 14.

Ce type de support plat 10 reçoit dans le cas de la Figure 1 une couche continue 20 de polyuréthanne mat, une couche discontinue 22 de brillance élevée et une couche discontinue 24 de brillance intermédiaire.

La Figure 3 est différente de la Figure 2 par le fait que la couche 20 est discontinue, les couches 22 et 24 recouvrant cependant les intervalles entre le dépôt de la couche 20.

Dans le cas du produit en relief de la Figure 4, la couche de mousse 13 a subi de manière classique un moussage différentiel selon la technique dit « cushion-floor». La couche d'usure 14 suit le relief, sans le combler, grâce à l'utilisation d'une technique adéquate et classique d'application de telles couches d'usure sur des produits en relief.

Par ces mêmes techniques, une première couche « topcoat » 20 est appliquée en continu en préservant le relief.

Ensuite, des couches 22 et 24 sont appliquées, par exemple uniquement sur les sommets pour 22 et dans les vallées et sur les sommets pour 24. Etant donné que la couche 20 est continue, on peut comme sur la partie droite de la Figure 4, laisser un espace entre la couche 24' et 22', aussi bien sur le sommet que dans la vallée créés par la couche 20, si l'on souhaite.

Le cas d'un parquet en bois selon la Figure 5 ne diffère de la Figure 1 que par la nature de la sous-couche 10 est un matériau composite formé par une couche inférieure 16, une couche intermédiaire 17 et une feuille (lamelle) de bois 18.

### Exemples d'exécution

Les formulations des compositions utilisées dans les différents exemples sont comme suit.

| Formules | A | B | C | D | E | F |
|---|---|---|---|---|---|---|
| - Polyuréthanne aliphatique base aqueuse ^{a} | 100 | 100 | 100 | - | - | - |
| - Polyuréthanne aliphatique acrylate ^{b} | - | - | - | 100 | 100 | 100 |
| - Tripropylène glycol diacrylate ^{c} | - | - | - | 40 | 40 | 40 |
| - Anti-mousse ^{d} | 0.2 | 0.2 | 0.2 | - | - | - |
| - Agent mouillant ^{e} | 0.2 | 0.2 | 0.2 | 0.2 | 0.2 | 0.2 |
| - Régulateur de viscosité ^{f} | 0.5 | 0.3 | 0.2 | - | - | - |
| - Agent de mattage ^{g} | - | 2 | 3 | - | 2 | 4 |
| - Photoinitiateurs ^{h} | 2 | 2 | 2 | - | 2 | 2 |

Ces constituants sont vendus sous les noms commerciaux ou marques ci-dessous par les producteurs indiqués.

| | | |
|---|---|---|
| a. | Neorad R450 | Zeneca |
| b. | Ebecryl 294 | UCB |
| c. | TPGDA | UCB |
| d. | Byk 022 | Byk Chemie |
| e. | Byk 346 | Byk chemie |
| | Fluorad FC 430 | 3M |
| f. | Coatex Rheo 2000 | Coatex |
| g. | Acematt + s 100 | Degussa |
| h. | Irgacure 184 | Ciba |

### Exemple 1 (Produit plat selon la Figure 2)

Le support est fabriqué selon les techniques classiques bien connues de l'homme de l'art.

Sur le support, le premier PU (formule C) est déposé en continu par enduiseuse à rouleaux (épaisseur 10 microns / matité 15). Le PU est séché par air chaud.

Le second PU (formule A) est déposé ensuite par technique héliographique (épaisseur 10 microns /brillance 80). Le PU est de nouveau séché par air chaud.

Le troisième PU (formule B) est déposé par cylindre héliographique en registre avec le dessin du deuxième PU (épaisseur 10 microns / brillance 50). Séchage par air chaud.

Les troisièmes PU sont finalement réticulés sous UV (puissance 160W/cm)

### Exemple 2 (produit plat suivant la Figure 3)

Premier PU (formule C) est déposé par cylindre héliographique (épaisseur 10 microns / matité 15). Séchage par air chaud.

Le second PU (formule A) est déposé par hélio en registre avec le premier PU (épaisseur 10 microns /matité 80). Séchage par air chaud.

Le troisième PU (formule B) est déposé par hélio en registre avec le premier et le deuxième PU (épaisseur 10 microns / matité 50). Séchage par air chaud.

Réticulation finale UV.

### Exemple 3 (produit en relief selon la Figure 4)

Premier dépôt PU (formule F) déposé par cylindre héliographique en continu (épaisseur 10 microns /matité 15). Le PU est ensuite réticulé par UV.

Le second PU (formule D) est ensuite déposé par hélio (épaisseur 10 microns / brillance 80). Réticulation UV.

Le troisième PU (formule E) est déposé par hélio en registre avec le deuxième PU et en registre avec le dessin du joint (épaisseur 10 microns / matité 50). Réticulation UV.

Réticulation finale UV.

## Revendications

1. Procédé de production de revêtement de sols et de murs à effet de décor de brillance différentiel, comprenant la réalisation d'un revêtement sous-jacent (10), **caractérisé en ce qu'**on réalise des effets de brillance par des dépôts différenciés (20, 22, 24) comprenant une première couche (20) et une seconde couche (22, 24), ladite première couche étant déposée en discontinu sur ledit support (10) et ensuite séchée, ladite seconde couche (22) et/ou (24) destinée à couvrir partiellement ou entièrement la première couche (20) de matité différente étant déposée de façon discontinue sans recouvrement total d'au moins deux couches de protection de caractéristiques différentes, en registre ou non, avec le décor sous-jacent et/ou avec le relief du produit, le degré de brillance desdites couches de protection à effets de brillance différenciés variant entre 5 à 90 (sous 60 degrés) et l'épaisseur des couches ainsi appliquées variant de 3 à 50 µm.

2. Procédé selon la revendication 1, **caractérisé en ce que** ledit revêtement sous-jacent destiné à recevoir le décor à effet de brillance différencié est lisse ou possède un relief réalisé par grainage chimique ou mécanique, et se présente sous forme flexible ou rigide.

3. Procédé selon la revendication 1 ou 2, **caractérisé en ce que** le décor sur le revêtement sous-jacent aux couches de protection différenciées (20, 22, 24) est imprimé et/ou réalisé par des inclusions de matières (inlaid).

4. Procédé selon l'une quelconque des revendication 1 à 3, **caractérisé en ce que** des effets de matité complémentaires sont obtenus soit par suite du recouvrement partiel de la première (20) et de la deuxième (22) couche, soit par l'application d'une ou plusieurs couches de protection supplémentaires (24).

5. Procédé selon l'une quelconque des revendications 1 à 4, **caractérisé en ce qu'**après chaque application d'une couche de protection, on procède à un séchage, à l'aide d'air chaud ou par radiation IR.

6. Procédé selon l'une quelconque des revendications 1 à 5, **caractérisé en ce que** lesdites couches de protection sont colorées.

7. Procédé selon l'une quelconque des revendications 1 à 6, **caractérisé en ce que** le dépôt des différentes couches de protection de brillance différenciée est réalisé par au moins une technique choisie, en discontinu dans le groupe :
- lame d'air;
- dépôt sérégraphique;
- dépôt héliographique;
- dépôt flexographique;
- enduiseuse à rouleau.

8. Procédé selon la revendication 7, **caractérisé en ce que** les dépôts des différentes couches de protection se font lors d'une étape de fabrication distincte de celle du support sous-jacent (10).

## Claims

1. Method for producing floor and wall coverings with a differential gloss decoration effect, comprising the production of an underlying covering (10), **characterised in that** gloss effects are produced by differential applications (20, 22, 24) comprising a first layer (20) and a second layer (22, 24), said first layer being discontinuously applied onto said support (10) and then dried, said second layer (22) and/or (24) intended to partially or totally cover the first layer (20) of different matting effect being discontinuously applied without total overlapping of at least two protective layers of different characteristics, possibly in register with the underlying decoration and/or with the embossment of the product, the degree of gloss of said protective layers with differential gloss effects ranging between 5 and 90 (under 60 degrees) and the thickness of the layers thus applied ranging from 3 to 50 m.

2. Method according to Claim 1, **characterised in that** said underlying covering intended to receive the decoration with a differential gloss effect is smooth or embossed by chemical or mechanical graining, and is in a flexible or rigid form.

3. Method according to Claim 1 or 2, **characterised in that** the decoration on the covering underlying the differential protective layers (20, 22, 24) is printed and/or made by inclusions of materials (inlaid).

4. Method according to any one of Claims 1 to 3, **characterised in that** complementary matting effects are obtained either following the partial overlapping of the first (20) and the second (22) layer, or by applying one or more additional protective layers (24).

5. Method according to any one of Claims 1 to 4, **characterised in that**, after each application of a protective layer, a drying operation is performed using hot air or by IR-irradiation.

6. Method according to any one of Claims 1 to 5, **characterised in that** said protective layers are coloured.

7. Method according to any one of Claims 1 to 6, **characterised in that** the application of the various protective layers of differential gloss is performed by at least one discontinuous technique chosen from the group:
- air knife;
- screen-printing application;
- heliographic application;
- flexographic application;
- roller coater.

8. Method according to Claim 7, **characterised in that** the various protective layers are applied during a manufacturing step that is separate from that of the underlying support (10).

## Patentansprüche

1. Verfahren zur Herstellung von Boden- und Wandbelägen mit Dekoreffekt unterschiedlichen Glanzgrades, das die Herstellung eines Unterbelages (10) umfasst, **dadurch gekennzeichnet, dass** man unterschiedliche Glanzwirkungen durch unterschiedliche Beschichtungen (20, 22, 24) herstellt, die eine erste Schicht (20) und eine zweite Schicht (22, 24) umfassen, wobei die besagte erste Schicht diskontinuierlich auf dem besagten Träger (10) aufgebracht und anschließend getrocknet wird und die besagte zweite Schicht (22) und/oder (24), die die erste Schicht (20) mit unterschiedlicher Mattheit teilweise oder vollständig bedecken soll, diskontinuierlich aufgebracht wird, ohne vollständige Überdeckung von mindestens zwei Schutzschichten mit unterschiedlichen Eigenschaften, die mit dem darunter liegenden Dekor und/oder dem Relief des Produkts lagegenau sind oder nicht; der Glanzgrad der besagten Schutzschichten mit unterschiedlicher Glanzwirkung variiert zwischen 5 und 90 (unter 60 Grad) und die Stärke der so aufgetragenen Schichten variiert zwischen 3 und 50 µm.

2. Verfahren nach Anspruch 1, **dadurch gekennzeichnet, dass** der besagte darunter liegende Belag, der mit dem Dekor mit unterschiedlichem Glanzeffekt versehen werden soll, glatt ist oder ein Relief aufweist, das durch chemische oder mechanische Prägung hergestellt wurde und flexibel oder starr ist.

3. Verfahren nach Anspruch 1 oder 2, **dadurch gekennzeichnet, dass** der Dekor auf den unter den unterschiedlichen Schutzschichten (20, 22, 24) liegenden Belag gedruckt ist und/oder durch Materialeinschluss (inlaid) erzeugt wird.

4. Verfahren nach einem der Ansprüche 1 bis 3, **dadurch gekennzeichnet, dass** zusätzliche Mattheitseffekte entweder infolge der teilweisen Bedeckung der ersten (20) und der zweiten (22) Schicht oder durch Auftrag einer oder mehrerer zusätzlicher Schutzschichten (24) erzielt werden.

5. Verfahren nach einem der Ansprüche 1 bis 4, **dadurch gekennzeichnet, dass** nach jedem Auftrag einer Schutzschicht eine Trocknung mit Heißluft oder durch Infrarotstrahlung durchgeführt wird.

6. Verfahren nach einem der Ansprüche 1 bis 5, **dadurch gekennzeichnet, dass** die besagten Schutzschichten gefärbt sind.

7. Verfahren nach einem der Ansprüche 1 bis 6, **dadurch gekennzeichnet, dass** der Auftrag der einzelnen Schutzschichten mit unterschiedlicher Glanzwirkung durch mindestens eine der aus folgender Gruppe beliebig ausgewählten Technik erfolgt:
- Luftbürste
- Auftrag durch Siebdruck
- Auftrag durch Heliografie
- Auftrag durch Flexodruck
- Walzenstreichmaschine

8. Verfahren nach Anspruch 7, **dadurch gekennzeichnet, dass** der Auftrag der verschiedenen Schutzschichten in einer anderen Herstellungsphase als der Herstellung des darunter liegenden Trägers (10) erfolgt.
